# EUROPEAN PATENT APPLICATION

(11) **EP 2 869 659 A1**
(43) Date of publication of application: **06.05.2015**
(21) Application number: 13191221.4
(22) Date of filing: 31.10.2013
(51) Int. Cl.: H04W 84/20, H04W 76/02

(54) **Wireless communications device, system and method for emergency services**

(71) Applicant: Dräger Safety AG & Co. KGaA, 23560 Lübeck (DE)
(72) Inventor: Rix, Antony William, Cambridge, CB3 0HR (GB); Ronayne, Brendan Joseph, Godmanchester, PE29 2DY (GB); Butler, Brian Julian, Cambridge, CB22 4NJ (GB); Davies, Richard Lewis, St Neots, PE19 6WQ (GB); Engelbrecht, Pirow, Melbourn, SG8 6NG (GB); Ritter, Henning, 23564 Lübeck (DE)
(74) Representative: UEXKÜLL & STOLBERG

(57) **Abstract**

A wireless communications device for an item of personal protective equipment, the device being configured to cooperate with other such wireless communications devices to form an ad-hoc group in which one device operates as a current master and the remaining devices operate as non-masters, the device comprising: a wireless communications unit configured to perform wireless communications with devices of the group; a controller configured to control the device to: (a) operate as a non-master to transmit to the current master a request to be allocated a radio resource, and transmit status data to the current master, and (b) operate as the current master to allocate radio resources to the devices of the group, transmit beacons, select a device from among the devices of the group as the next current master on the basis of status data received from devices of the group, transmit to at least the selected device information indicative of the selection, and transmit to the selected device an instruction to take over as the current master on the basis of the status data, wherein the controller is configured to switch the device from (a) to (b) if the device is selected as the next current master and either upon receiving the instruction from the current master or upon not receiving a beacon from the current master for a predetermined period of time, and from (b) to (a) after transmitting the instruction.

## Description

### Field

Embodiments described herein relate to a wireless communications device, system and method, particularly but not exclusively for fire, rescue and other emergency services.

### Background

Wireless mesh communications systems are well-known, with examples including IEEE 802.11s and Zigbee standards. The general objective of such systems is to establish a data communications link either between devices (nodes) in the network or from nodes to a communications infrastructure such as an Internet connection that may only be available on a small number of router devices. By way of example, Zigbee networks are formed of devices of three types: coordinators, end devices and routers. A coordinator initially forms the network, and is responsible for security aspects. An end device is a device that can communicate with the network. A router is a special type of device that is also able to relay messages to or from nodes. The coordinator is core to the network. In a typical non-beaconing network, the coordinator will be always-on either receiving or transmitting on the shared network channel. Routers are also always-on, either transmitting or receiving. Connected nodes may wake up and transmit at any time, and the routers and coordinator would then forward the message as required.

One mechanism common in many wireless mesh and broadcast networks is the use of beacons. A beacon is a specific signal sent periodically with predictable timing. By synchronizing transmissions to the beacon, nodes can remain powered down for a large proportion of the time, while still remaining addressable. For networks where some gateway devices have a connection to another network, for example an Internet connection, it is common for the coordinator to be such a gateway device. An example of this is Wi-Fi, where access points act as gateway devices.

Much effort in mesh network design has focused on the routing algorithm, which defines how a message sent by one node is forwarded to the intended destination. In networks that are large (with many nodes) or dense (where many nodes, though not necessarily all, are in range of each other), this can have a significant influence on the network's efficiency. However, the driving principle behind the vast majority of known approaches is to establish resilient data communications networks, where the focus is on relaying data packets over the network. High packet delivery rates are achieved at the expense of efficiency (that is, the effective data rate is often very much smaller than the radio channel data rate) and delay (which can be large, and potentially nondeterministic if the system relies on retransmissions).

For communication of voice or other time-critical data, the result of these design decisions is that wireless mesh networks behave poorly. The problem of efficiency noted above means that the network would require large bandwidth, consuming valuable radio spectrum resource and reducing range. Delay also can be a major problem. If delay is large, messages may not arrive in time, and voice conversation becomes more difficult as speakers frequently talk over each other or can hear unpleasant echoes between a direct audio path and the path over the wireless network.

A further issue emerges where networks may change quickly. An example is where devices may be carried by people. Within a built-up environment, radio propagation can change very significantly as people move, for example in and out of rooms. If a router or coordinator node quickly drops out of range or fails (for example due to its battery running out), it can take significant time for the network to rebuild, and with some types of network, if the coordinator or base station is not present the network cannot re-establish. This is because the routers/coordinators act as single points of failure with significant impact on the function of the system: when they go out of range, nodes that were communicating through them are now isolated and have to re-route. This means that the state-of-the-art wireless ad-hoc network and mesh network systems are often not well suited to applications where connectivity can change quickly or device failure must result in minimal loss of service.

Some networks implement the concept of quality of service (QoS), which allows time-critical traffic to be prioritized ahead of non-critical traffic. However, this does not address the problems of nondeterministic delay and the single point of failure of the coordinator or gateway device.

There are also existing digital voice communications standards, such as cellular radio systems (examples being GSM and 3G WCDMA), TETRA and other narrowband radio systems, and DECT. Several of these are based upon the concept of a base station, which controls or forms the gateway for communication to user equipment. With DECT systems, there is usually only one base station, although the standard can support roaming of devices between base stations. With cellular and TETRA networks, a normal network is built with many base stations, and roaming is common. However, base stations may not be installed in the area where coverage is desired, and the base station forms a single point of failure. TETRA radios may also operate independently of base station infrastructure using so-called direct mode operation (DMO). This allows radios to communicate when in radio range of each other, essentially acting like a digital walkie-talkie. But the TETRA DMO system does not have the ability to achieve multiple hops or to perform the more sophisticated functions of admission control.

Many of the systems mentioned previously are based on the concept of time division duplex (TDD). TDD is known as a way to share a communications medium between multiple devices. It has a useful benefit of achieving deterministic, and potentially low, delay. Generally the base station (for example in OECT and GSM), or a coordinator or router (for example, Zigbee with beaconing), establishes a timing structure by regularly sending messages such as beacons or data frames. Devices are allocated specific timeslots (time intervals of known duration and known delay with respect to the beacon or frame start) in which to transmit or receive. Timeslots are often short, of duration on the order of 1-20ms. Several devices can then communicate by transmitting or receiving in different timeslots, without interfering with each other. However, existing timing structures are not particularly suited for emergency services communications systems.

Hence, there is a need for an improved wireless communications devices, systems and methods.

### Summary

According to an aspect, there is provided a wireless communications device for an item of personal protective equipment, the device being configured to cooperate with other such wireless communications devices to form an ad-hoc group in which one device operates as a current master and the remaining devices operate as non-masters, the device comprising: a wireless communications unit configured to perform wireless communications with devices of the group; a controller configured to control the device to: (a) operate as a non-master to transmit to the current master a request to be allocated a radio resource, and transmit status data to the current master, and (b) operate as the current master to allocate radio resources to the devices of the group, transmit beacons, select a device from among the devices of the group as the next current master on the basis of status data received from devices of the group, transmit to at least the selected device information indicative of the selection, and transmit to the selected device an instruction to take over as the current master on the basis of the status data, wherein the controller is configured to switch the device from (a) to (b) if the device is selected as the next current master and either upon receiving the instruction from the current master or upon not receiving a beacon from the current master for a predetermined period of time, and from (b) to (a) after transmitting the instruction.

The ability of devices to form an ad-hoc group, that is in self-organizing manner without the need for a base station or other fixed infrastructure (and without user intervention), means that such devices are quickly deployable. Furthermore, the ability of one device to operate as a master responsible for resource allocation enables efficient use of a radio spectrum. Generally, devices can communicate both directly with each other and indirectly through the current master (operating as a relay).

The selected device can take over as the next current master upon not receiving a beacon from the current master for a predetermined period of time, that is when communication with the current master is lost or otherwise becomes unavailable (referred to herein as the "failover master"). The provision of a failover master means that a single point of failure can be avoided, and makes the group resilient to the loss or movement of the current master.

The selected device can also take over as the next current master when instructed to do so by the current master, that is when the selected device is determined to be a more suitable device than the current master for that role (referred to herein as the "floating master"). The selected device can be, for example, a device that is better located (e.g., is in range of more devices) or better connected (e.g., has higher signal quality) than the current master of the group, and is determined based on the status data.

The current master can select a different device to be the failover master or the floating master at any time, to account for changes in network conditions and movement of devices. In other words, the selection of a device to be the next current master and transmitting information indicative of the selection can be carried out repeatedly.

The information indicative of the selection and the (handover) instruction to take over as the next current master can be transmitted in the same signal or in separate signals, for example in one or more beacons. The next current master can continue to use the beacon timing used by the previous master, which allows transmissions to continue with no or minimal interruption. Furthermore, the process occurs with minimal additional signalling overhead.

In embodiments, the radio resources comprise time slots within a radio frame of one or more frequency channels. For example, devices of different groups can stay on a frequency or hop to different frequencies based on a hopping sequence. Of course, the radio resources can be in any one or combination of the time, frequency and/or code domain, and different groups of devices can therefore be separated by time, frequency and/or code.

In one embodiment, the radio frame comprises: a beacon time slot for use by the current master to transmit a beacon, a request time slot for use by a non-master to transmit a request to be allocated a time slot in one or more subsequent radio frames; at least two transmission time slots for allocation by the current master to one or more non-masters for transmission, and a status data time slot for allocation by the current master to a non-master to transmit status data to the current master, wherein the beacon includes information identifying the one or more non-masters to which the at least two transmission time slots are allocated. Such a radio frame is suitable for voice and other time-critical data applications. Furthermore, the time slots can include another beacon time slot for use by the current master to transmit another beacon, which can include some or all of the information contained in the beacon. Additionally, the beacon time slots can be used to repeat the information transmitted in the transmission time slots of the previous frame. This increases the probability of reception of beacons/transmissions.

The 'failover master' and 'floating master' mechanisms can be embodied in other forms, such as in the form of a 'failover channel' and 'floating channel'.

A failover channel is an alternate communication channel that is used by a group, for example when there is a sudden outage of the current communication channel used by devices of the group. Thus, when operating as the current master the device can select an alternate communication channel, and transmit information indicative of the alternative communication channel to the other devices of the group. Such information can be transmitted in a beacon for example. When operating as the current master the controller can switch the device to the alternate communication channel upon not receiving status data from the other devices of the group, and when operating as a non-master master upon not receiving a beacon from the current master for a predetermined period of time and if not selected as the next current master.

A floating channel is an alternate communication channel that is used by a group when instructed to do so by the current master, for example when the channel quality of the current communication channel degrades or the current master decides that a channel switch will improve communications performance. Such a decision can be based on received status data for example. Thus, when operating as the current master the device can also transmit an instruction to switch from the current communication channel to the selected alternate communication channel. When operating as the current master the controller can switch the device to the alternate communication channel after transmitting the instruction, and when operating as a non-master master upon receiving the instruction to switch from the current master.

In one embodiment, when the device operates as the current master, the controller is further configured to control the device to: select an alternate frequency channel from a frequency channel that is currently being used by the devices of the group, transmit information indicative of the alternate frequency channel, and transmit an instruction to switch from the current communication channel to the selected alternate communication channel.

After switching to an alternate communication channel, the current master can continue to transmit beacons on the previous communication channel at least for a short period of time in case some devices do not receive the instruction.

The 'failover master', 'floating master', 'failover channel' and 'floating channel' mechanisms can be implemented individually, all together, or in any combination thereof.

Devices can dynamically join and leave the group as they move in to and out of communications range of the current master. This means that devices can readily adapt to changing conditions. In one embodiment, the current master is responsible for controlling admission to the group. Thus, when the device operates as the current master, the controller can be further configured to control the device to receive a request from a device, that has moved into communication range of the group, to join the group, and transmit an acknowledgement indicating that the device is admitted to the group. Correspondingly, when the device operates as a non-master that that has moved into communication range of the group, the controller can be further configured to control the device to detect a beacon transmitted by the current master of the group, and transmit a request to join the group.

Devices can also dynamically form groups. This includes merging two or more groups into one group and splitting a group into two or more groups. For example, when a team of emergency services personnel such as fire fighters move around an incident scene, wireless communications devices belonging to the team members may move out of and in to communications range of each other. When this happens the devices can dynamically split into groups or merge groups, while seamlessly maintaining communication between devices of a group. Such groups can have the same group identifier. That is, a set of devices which can dynamically form one of more groups, can be assigned (e.g., pre-assigned) the same group identifier so that the devices are associated with one another. Similarly, different sets of devices, belonging to different teams of emergency services personnel for example, can be assigned (e.g., pre-assigned) different group identifiers. This allows the different sets of devices to operate at the same location without impeding one another.

In one embodiment, when the device operates as the current master, the controller is further configured to control the device to detect the presence of another group, and transmit an instruction to devices of the group to join the other group. These groups can have the same group identifier. Correspondingly, when the device operates as the non-master the controller is further configured to control the device to receive the instruction from the current master to join the other group, and join the other group. For example, the master can instruct the devices of the group to switch to the other group in turn, but does not itself switch to the other group until all of the devices of its group have successfully done so (e.g., when it no longer receives status data), so as to avoid leaving a non-master that is not connected to any other device. The decision to switch can be based on received status data or a comparison of the groups (e.g., the group with the least number of devices switches) so that only one group will begin the process of switching.

The presence of another group can be detected by scanning the frequency channels for beacons transmitted by the current master of that other group. However, the current master can also instruct one or more devices of the group to scan for any other existing group in the vicinity and report any such instances. Accordingly, the device can perform the scan using the wireless communications unit or a further wireless communications unit. For example, the wireless communications unit is configured to scan frequency channels for detecting beacons from a master of another group of devices during pauses in transmissions. In another embodiment, the device comprises a further wireless communications unit configured to scan frequency channels for detecting beacons from a master of another group of devices. Providing separate wireless communications units allows the functions of transmitting/receiving and scanning to be performed independent of each other.

A non-master device can leave the group when it does not receive a beacon from the current master device for a predetermined period of time. Thus, when the device operates as the non-master, the controller can be further configured to control the device to form a new group if no beacon is received from the current master for a predetermined period of time and if the device is not selected as the next current master. Forming a new group can involve becoming a master device and transmitting beacons. As noted earlier, the new group can have the same group identifier. A master device can similarly form a new group when it receives no status data from devices of the group.

It will be appreciated that, in any of the embodiments, not receiving a beacon signal for a predetermined period of time includes not receiving an adequate quality beacon signal, for example where the reception quality of the beacon drops below a threshold. Similarly, not receiving status data for a predetermined period of time includes not receiving adequate quality status data, for example where the reception quality of the status data drops below a threshold.

In one embodiment, the status data comprises one or more of: a communications metric and a device metric. A metric can be calculated by the device when operating as a non-master (e.g., reporting signal strength of beacons and/or transmissions from other devices to the current master) or when operating as the current master (e.g., based on its own measurements and/or using status data obtained from non-master devices).

The term communications metric generally denotes any metric related to communication between the devices. For example, such a communication metric can be indicative of signal strength, signal interference, quality of a communication link, amount of data received, a number of other devices in range, a list of other devices in range, a list of other devices in range providing at least one communication metric, etc. More specifically, such a communication metric can be, for example, a signal strength measure, a signal to interference ratio measure, a link quality or link error rate measure, a measure of packets received in a defined period, etc. Information about other devices can be determined, for example, from received transmissions.

The term device metric generally denotes any metric related to a state of the device or a component thereof. For example, such a device metric can be a metric indicative of an operational state of the device or a component of the device. More specifically, such a device parameter can be, for example, a battery level indication.

The calculation of a metric can be performed by measuring, estimating, or otherwise determining that metric periodically, for example at least once every second. As such, status data can also be transmitted periodically. This allows the devices to rapidly respond to changing network conditions and device movement.

Devices can also transmit a device identifier, which generally denotes any information that can be used to identify a device. Thus, devices can maintain a table of group members. The table can be updated based on received device identifiers. When the device determines that it is no longer in range of the network it clears the table.

In one embodiment, the device is configured to assume the same group identifier as the other devices of the group. In this way, more than one group (network) can coexist in a location, with each device communicating only or primarily with devices that share the same group identifier.

Personal protective equipment generally refers to any device or clothing designed to protect the user or wearer from risks of injury or illness. An item of personal protective equipment can include, for example, respirators, protective eyewear, and helmets. For example, an item of personal protective equipment can be a face mask or full face mask for use with a self-contained breathing apparatus or filter canister. The device can be directly or indirectly attached to an item of personal protective equipment. For example, the device can be connected to a headset that is attached to a helmet, with the device held by the wearer or attached to a belt. Alternatively, the device can be integrated with or configured to be integrated with an item of personal protective equipment, such as a visor frame of a full face mask. This allows for voice communications, for example hands-free voice communications. It will be appreciated, however, that the device could be held by the user and that the device can also be configured to monitor vital signs, read telemetry, and/or acquire sensor data.

The device can find application in the emergency services field, for example use by emergency services personnel such as, for example, fire fighters and mine rescue workers. However, it can also find application in the medical and other fields.

According to another aspect, there is provided an emergency services wireless communications system comprising a plurality of the aforementioned wireless communications devices. Such a self-organizing system, in which devices organize themselves into one or more groups and provide communications functionality without any fixed infrastructure, makes it highly advantageous for emergency services personnel who are mobile and deployed in locations where no or little fixed infrastructure is in place or operational. Such a system is distinguished from cellular radio systems (examples being GSM and 3G WCDMA), TETRA and other narrowband radio systems, and DECT, in that there is no base station. Furthermore, all or substantially all devices of the group can be configured to be the same.

According to another aspect, there is provided an item of personal protective equipment with an integrated or integratable aforementioned wireless communications device.

According to another aspect, there is provided a method performed by a wireless communications device, comprising: cooperating with other such wireless communications devices to form an ad-hoc group in which one device operates as a current master and the remaining devices operate as non-masters; controlling the device to (a) operate as a non-master to transmit to the current master a request to be allocated a radio resource, and transmit status data to the current master, and (b) operate as the current master to allocate radio resources to the devices of the group, transmit beacons, select a device from among the devices of the group as the next current master on the basis of received status, transmit to at least the selected device information indicative of the selection and/or transmit to the selected device an instruction to take over as the current master, including switching the device from (a) to (b) if the device is selected as the next current master and either upon receiving the instruction from the current master or upon not receiving a beacon signal from the current master for a predetermined period of time, and from (b) to (a) after transmitting the instruction.

According to one embodiment, there is provided a computer-readable medium carrying instructions which, when executed by a wireless communications device, causes the wireless communications device to perform the aforementioned method.

The instructions may be stored on any type of computer-readable medium, for example, such as a storage device including a disk or hard drive. The computer-readable medium may include a non-transitory computer-readable medium, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example. The computer readable media may also be any other volatile or non-volatile storage systems. The computer-readable medium may be considered a computer-readable storage medium, a tangible storage device, or other article of manufacture, for example. Furthermore, the instructions may be in the form of a signal that may be, for example, downloadable over a communications network such as, for example, the Internet.

Any of the various illustrative logical blocks, modules, processors, means, circuits, and algorithm steps described in connection with the aspects disclosed herein may be implemented as hardware, software, or combinations of both, and may include a general purpose processor, a digital signal processor (DSP), an application specific integrated circuit (ASIC), a field programmable gate array (FPGA) or other programmable logic device, discrete gate or transistor logic, discrete hardware components, electrical components optical components, mechanical components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Various embodiments also provide a radio frame structure for a wireless communications device for an item of personal protective equipment, the device being configured to cooperate with other such wireless communications devices to form an ad-hoc group in which one device operates as the current master and the remaining devices operate as non-masters, wherein the current master is configured to allocate radio resources to devices of the group, the radio frame structure comprising: a beacon time slot for use by the current master to transmit a beacon, a request time slot for use by a non-master to transmit a request to be allocated a time slot in one or more subsequent radio frames; at least two transmission time slots for allocation by the current master to one or more non-masters for transmission, and a status data time slot for allocation by the current master to a non-master to transmit status data to the current master, wherein the beacon includes information identifying the one or more non-masters to which the at least two transmission time slots are allocated.

Features from specific embodiments may be combined with features from other embodiments. For example, features from one embodiment may be combined with features from any of the other embodiments. In further embodiments, additional features may be added to the specific embodiments described herein.

### Brief Description of the Drawings

A detailed description of one or more embodiments of the invention is provided, by way of example and not limitation, with reference to the accompanying drawings in which:
Figure 1 schematically illustrates a wireless communications system for emergency services;
Figure 2 schematically illustrates a radio frame structure;
Figure 3 schematically illustrates devices forming a group;
Figure 4 schematically illustrates a device joining a group;
Figure 5 is a flow chart of a method of creating or joining a group;
Figure 6 is a flow chart of a method of a device leaving a group;
Figure 7 schematically illustrates a change of master;
Figure 8 is a flow chart of a method of designating a failover master;
Figure 9 schematically illustrates a change of master when the group losses the current master;
Figure 10 is a flow chart of a method of designating a failover master;
Figure 11 is a flow chart of a method of changing the current master;
Figure 12 schematically illustrates a merging of two groups;
Figure 13 is a flow chart of a method of merging groups;
Figure 14 schematically illustrates splitting a group into two groups;
Figure 15 is a flow chart of a method of splitting a group into two groups;
Figure 16 schematically illustrates a group accessing an external network;
Figure 17 schematically illustrates a wireless communications device; and
Figure 18 schematically illustrates functional modules of the wireless communications device.

### Detailed Description

Embodiments describe a self-organizing, wireless mesh network for communication between a set of devices. The term "group" or "device group" is generally used herein to refer to such a set of devices, and the term "node" is generally used herein to refer to one such device.

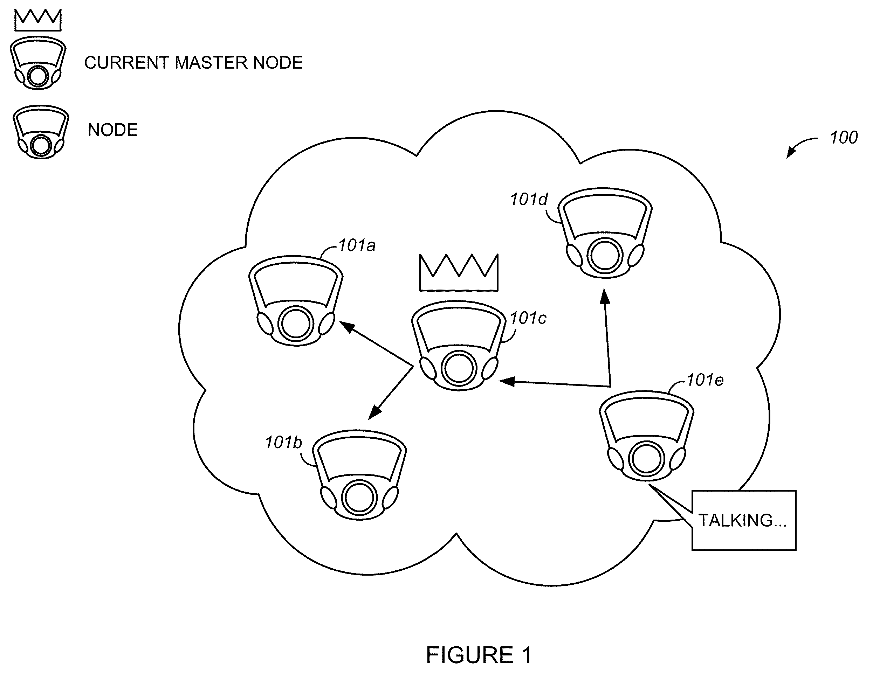

Referring to Figure 1, a device group 100 comprises a plurality of nodes 101 a, 101 b, 101 c, 101 d, 101 e, 101f, with one node 101 c operating as a master responsible for coordinating the group 100. Which node is master can change depending on the connections between the nodes, and other factors such as battery life. Communications channels (timeslots) are allocated by the master, and the master repeats the communication messages that it receives from nodes that may be of interest to other nodes. The general principles by which devices can communicate wirelessly with each other are known in the art and will not be described in further detail here except to say that nodes can decode messages received directly from other nodes as well as messages repeated by the master. The group 100 can operate correctly as long as all nodes are in range of the master, even if some nodes are not directly reachable from others. For example, node 101e is in range of nodes 101c, 101d, but out of range of nodes 101a, 101b. Thus, direct communication with nodes 101c, 101 d is possible, but not with nodes 101a, 101 b, for which node 101c acts as a relay (as denoted by the arrows).

The timing of communications is established, and certain timeslots are allocated, by the current master, where the master is not a fixed piece of infrastructure or a device that is pre-configured for this role (i.e., the 'floating master'). The lack of base station infrastructure distinguishes the present system over cellular systems, while the floating master aspect distinguishes the present system over other ad-hoc systems such as Zigbee.

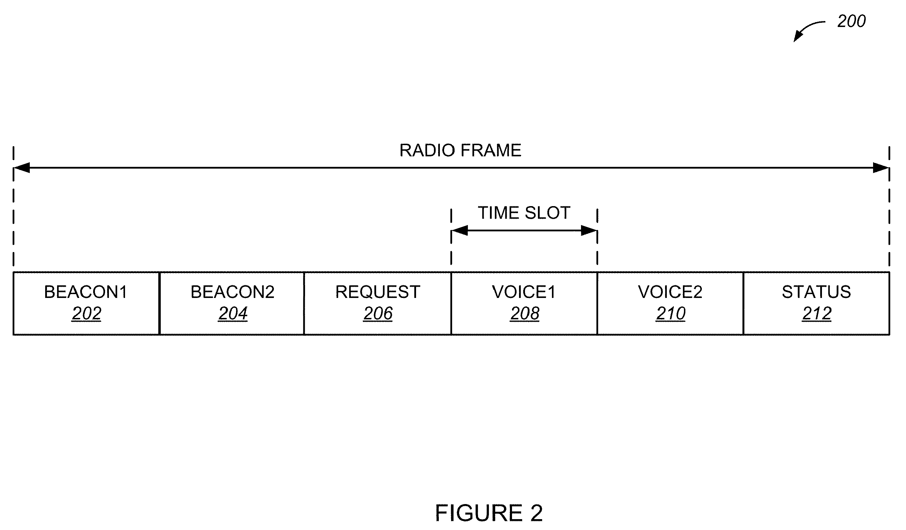

A radio frame structure according to an embodiment is shown in Figure 2. The radio frame structure comprises two data timeslots 208, 210, which may be used to establish two voice channels, allowing two members of the group to speak at one time, and two corresponding beacon/repeat timeslots 202, 204 that allow speech from both members to be relayed to other group members. Also included is a request timeslot 206 that allows a device to request a data timeslot of a next radio frame, and a status timeslot 212 that allows a device to transmit status data to the master. In particular, the master assigns the status timeslot 212 to a device of the group according to a round-robin scheme for example.

Each group operates on a single logical channel. In some cases this may use frequency hopping, in others it will be a single static frequency. Where frequency hopping is used, all group members hop frequency according to a pre-determined or adaptive pattern, under the coordination of the master, using a predictable approach that allows another device to take over as master while the group continues on hop pattern known to all members. In all cases, all group members share the same group ID and, if encryption is implemented, security algorithm and key.

Multiple groups may coexist in the same location by operating on different channels or using different frequency hop patterns or offsets.

All group members participate on the channel under control of the master using a Time Division Duplex (TDD) approach. The channel is divided into frames, with each frame divided into timeslots. Where frequency hopping is used the hopping rate can be fast (at a rate that is faster than the frame rate) or slow (at a rate slower than the frame rate). By way of example only, the system may hop to a new frequency between the end of each frame and the start of the next, or hops may take place after a set number of frames. Timing is controlled by the master. The communications protocol may be based around a limited set of packets with defined structures and lengths according to the table below. Packets may begin with a common packet header that includes the packet type, protocol version and an identifier of the transmitter node. In one example, the communications protocol is based on a radio frame having two data timeslots and two beacon/repeater timeslots.

| **Packet type** | **Sent by** | **Description** |
|---|---|---|
| Beacon1 | Current Master | Used for system control. Defines who transmits in Voice and Status slots in this radio frame (N). Defines system time, and allows frame synchronization. Identifies floating and failover master(s)/channel(s) and carries other system commands such as handover instruction. Can also convey group identifier. Payload can repeat the Voice1 packet received in a previous radio frame. |
| Beacon2 | Current Master | Header repeats the beacon header sent earlier in radio frame. Identical to Beacon1 apart from a flag or header denoting that this is the second beacon. Used to maximize probability of reception of the beacon. Payload can repeat the Voice2 packet received in a previous radio frame. |
| Request | Node | Requests ability to transmit voice in a subsequent radio frame, subject to assignment by the master in the Beacon. Also may be used for (re)joining groups. |
| Voice1 | TalkerA | Audio codec data for talker assigned by master to this slot in Beacon(N). Can be left empty if no device assigned. |
| Voice2 | TalkerB | Audio codec data for talker assigned by master to this slot in Beacon(N). Can be left empty if no device assigned. |
| Status | Node assigned to report status | Used to transmits status data by node assigned by master to this slot in Beacon(N). Can be assigned to connected nodes in turn to report, e.g., battery status, current master, rolling list of other status nodes received, and indicator of interference. Periodically can be left unused for on-channel interference monitoring by all nodes. |

While voice data is used here as an example, it will be clear to the skilled reader that the time slots can also be used to carry other types of information, such as telemetry, computer data, files, images, video, etc.

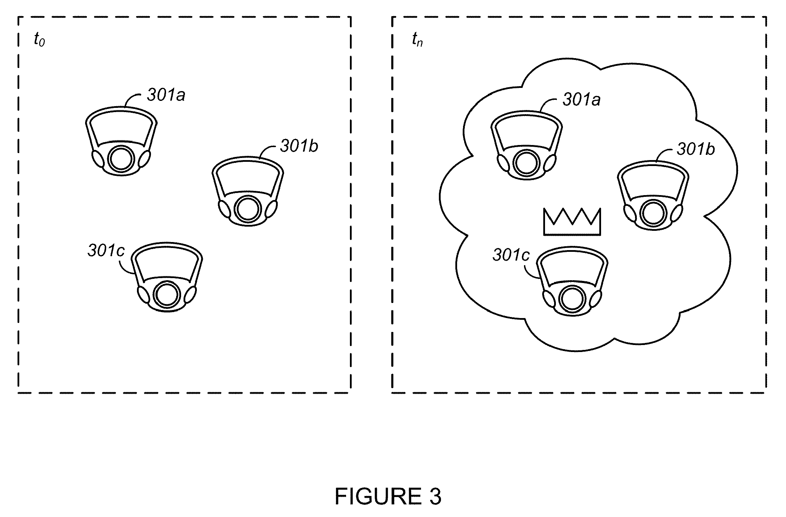

Various methods by which nodes create, join and leave groups are now described with reference to Figures 3 to 16.

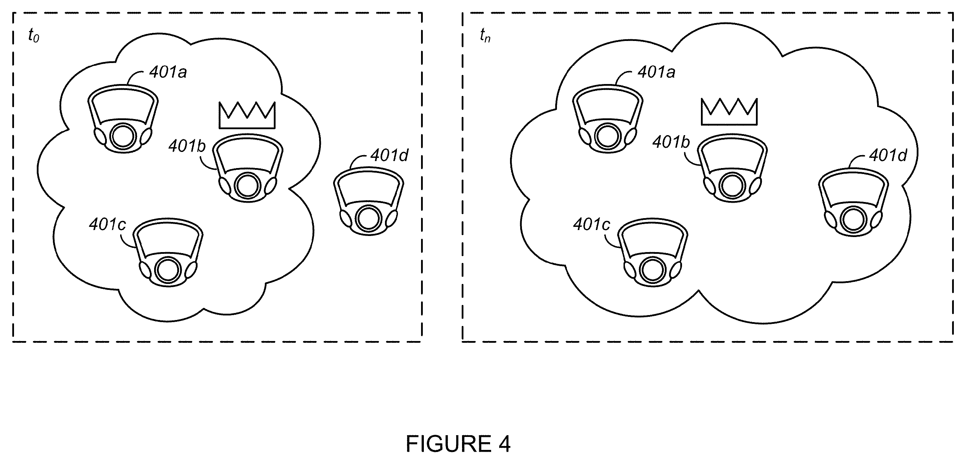

Figures 3 and 4 schematically illustrate how nodes create a group and how a node joins a group, respectively.

In Figure 3, at an initial time, to, nodes 301 a, 301 b, 301c are separate. At a later time, tₙ, the nodes 301 a, 301 b, 301 c have formed a group, with node 301 c as the current master.

In Figure 4, at an initial time, to, nodes 401 a, 401 b, 401c have formed a group, with node 401 b operating as the current master. Node 401d moves within range of the master. At a later time, tₙ, the node 401 d has joined the group. Here, node 401 b remains the current master.

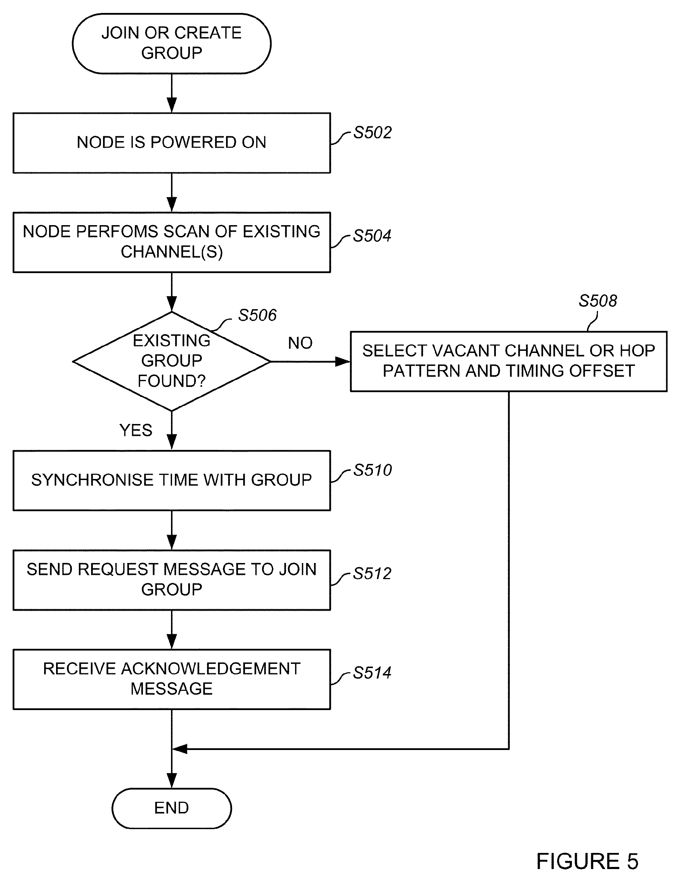

Figure 5 is a flowchart of a method of how a node creates a group or joins a group. The method includes the following steps:
- Step S502:: Node powers on.
- Step S504:: Node performs a scan of existing channel(s).
- Step S506:: The node determines whether there is an existing group.
- Step S508:: If no existing group is found (NO in step S506), the node creates a group. For static channel systems, the node selects a vacant channel based on scan. For frequency hopping systems, the node selects a hop pattern and timing offset. If there are no vacant channels, which can be determined based on a criterion such as received signal strength or observed occupancy, the node sleeps before again performing a scan. Otherwise, the node becomes master of the created group and sends beacons.
- Step S510:: If an existing group is found (YES in step S506), the node attempts to join the group. The node synchronizes time with the group and monitors several radio frames to recover the ID of the current master and ensure it is the node's group. If not the node's group, the node sleeps before again performing a scan.
- Step S512:: The node sends a request message to join the group. If the message is not acknowledged by the current master, the node waits for a small, random number of frames before retrying (up to a preset number of times). If still not acknowledged by the current master, the node sleeps before again performing a scan.
- Step S514:: If the master sends an acknowledge message (for example in a beacon packet), the node becomes a member of the group.

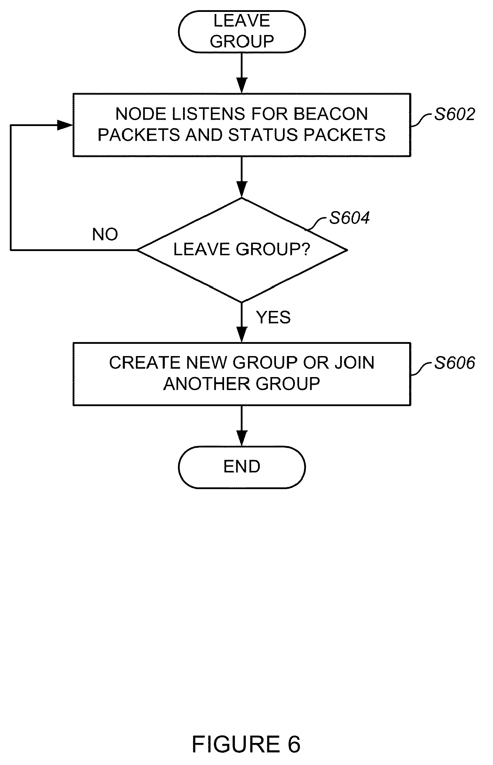

Figure 6 is a flowchart of a method of leaving a group. The method includes the following steps:
- Step S602:: The node is member of a group and listens for beacon packets from the current master and status packets from other nodes.
- Step S604:: The node determines whether to remain in the group.
- Step S606:: If the node determines to leave the group (NO in step S604), for example if the node does not receive packets at an acceptable rate or quality, then the node creates a new group or joins another group (using a programmed Group ID for example).

As noted previously, the next current master can be a failover master or a floating master. These will now be described.

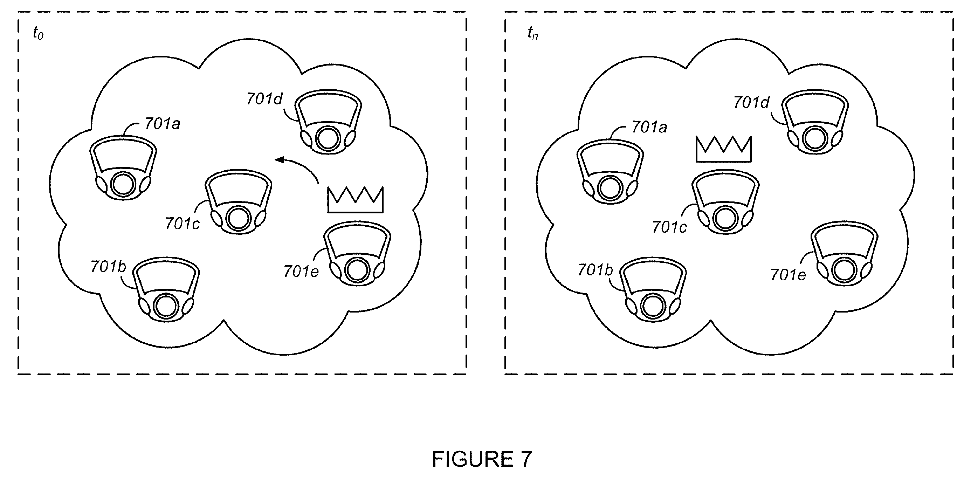

Turning first to Figure 7, this schematically illustrates how the role of the current master changes from one node of a group to another node of the group, in accordance with the 'floating master' principle. At an initial time, to, nodes 701a, 701b, 701c, 701d and 701e form a group, with node 701 e operating as the current master and designating node 701c as the next current master. At a later time, tₙ, the node 701c takes over the role of the current master from node 701e, which remains in the group.

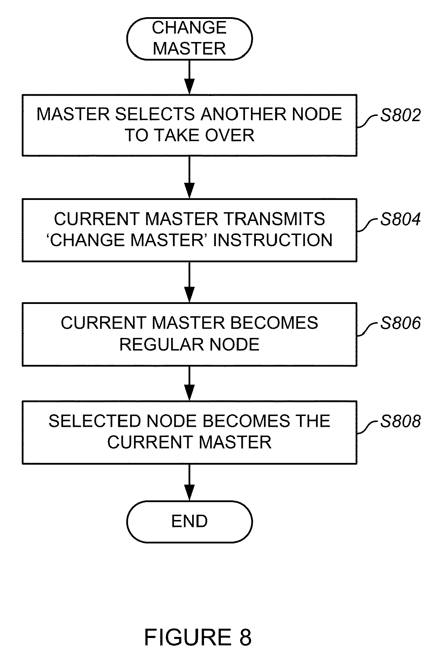

Figure 8 is a flowchart of a method of changing the current master, in accordance with the 'floating master' principle. The method includes the following steps:
- Step S802:: The master determines from status packets that another node is to take over as the current master. By way of example, this could be when another node has better communication links with other devices or is in range of more group members, or the master determines that its battery level is too low.
- Step S804:: The master transmits an instruction to 'change master' in a message, for example in a field in a beacon packet. The signal may also include the ID of the failover master in the beacon packet.
- Step S806:: The current master becomes a non-master node (regular node).
- Step S808:: The failover master becomes the next current master and sends beacons continuing the previous frame timing and, if applicable, hopping pattern.

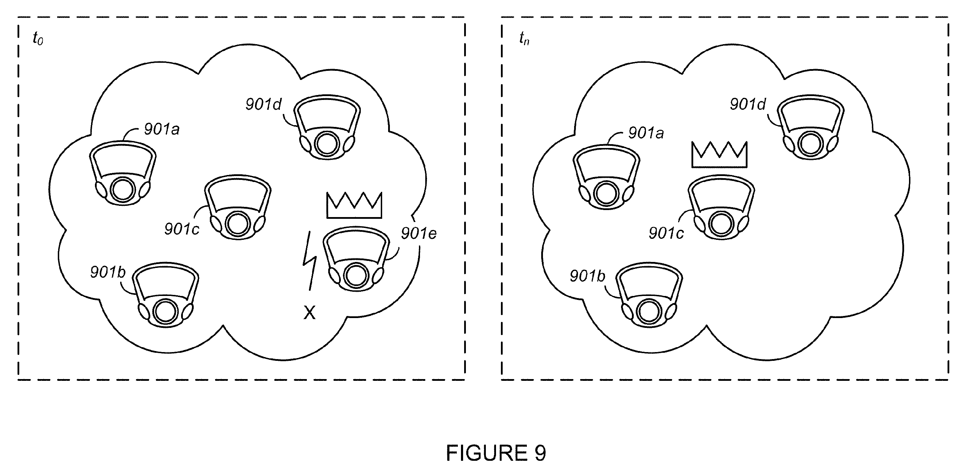

Figure 9 schematically illustrate how the role of the current master changes from one node of a group to another node of the group in accordance with the 'failover master' principle, where a group losses the current master without it being possible to transmit a 'change master' instruction. At an initial time, to, nodes 901a, 901b, 901c, 901d and 901e form a group, with node 901e operating as the current master and node 901c designated as the backup master. At a later time, tₙ, the node 901e becomes unavailable, for example due to a loss of communication, and node 901c takes over the role of the current master. Unlike the scenario described with reference to Figure 7, node 901e does not remain in the group.

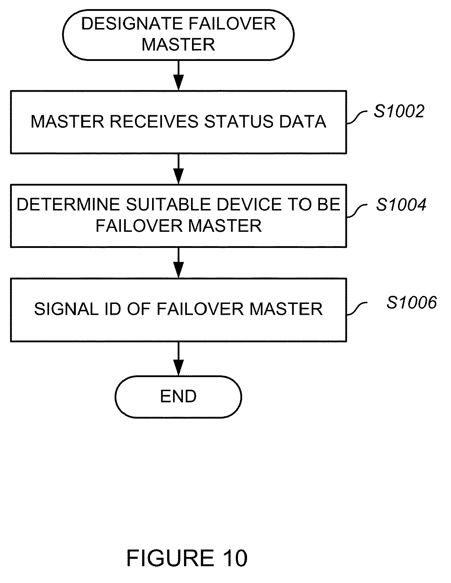

Figure 10 is a flowchart of a method of designating a failover master. The method includes the following steps:
- Step S1002:: The master receives status packets from other devices of the group.
- Step S1004:: The current master selects a device that is suitable to be the failover master on the basis of received status packets. By way of example, this could be the node that is in range of more (or the most) group members.
- Step S1006:: The master signals ID of failover master in a message, for example a field in a beacon packet. Failover master is now designated.

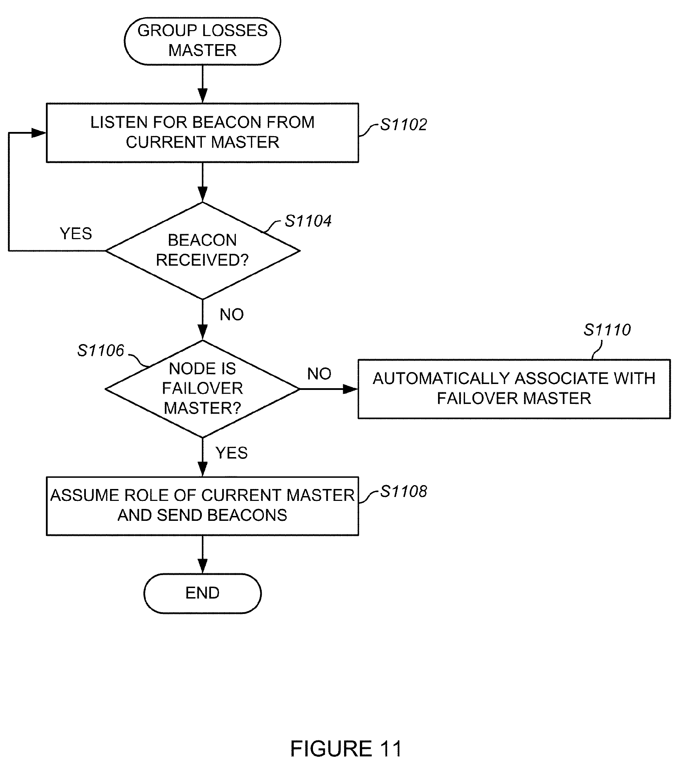

- Figure 11: is a flowchart of a method of changing the current master in accordance with the 'failover master principle. The method includes the following steps:
- Step S1102:: Nodes listens for beacons from the current master.
- Step S1108:: If a failover master receives few or no beacon packets for a defined period without detecting a 'change master' signal (NO at step S1104 and YES at step S1106), it becomes the current master and sends beacons continuing the previous frame timing.
- Step S1110:: If a member node receives few or no beacon packets for a defined period without detecting a 'change master' signal (NO at steps S1104 and S1106), it recognizes beacon packets from the failover master (the new current master) and is automatically associated to the new master (i.e., a join group process is not required).

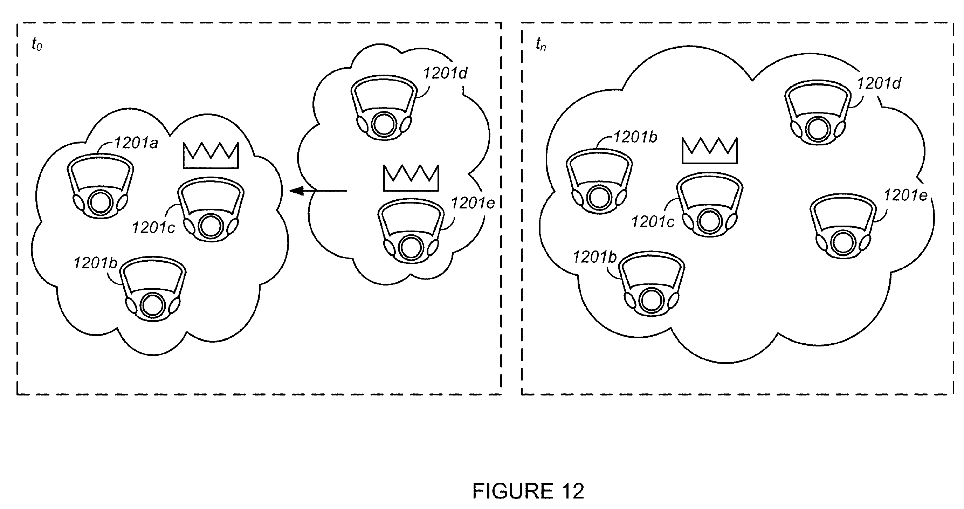

Figure 12 schematically illustrate how two groups of nodes can merge. At an initial time, to, nodes 1201 a, 1201 b, 1201c have formed a first group, with node 1201c operating as the master, and nodes 1201d, 1201e have formed a second group, with node 1201e operating as the master. At a later time, tₙ, the two groups come into proximity of each other and merge to form one group, with node 1201c operating as the master.

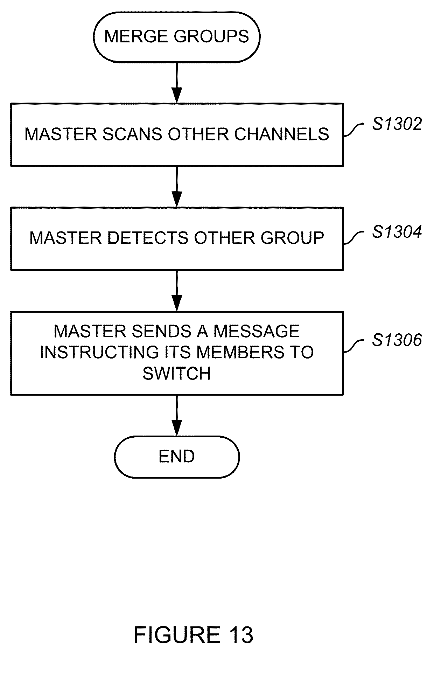

Figure 13 is a flowchart of a method of merging two subgroups. The method includes the following steps:
- Step S1302:: The current master scans other channels using its second radio and/or status reports.
- Step S1304:: The current master detects same Group on a channel with better figure of merit (for example a lower frequency, ID or hop position, or a larger number of connected nodes).
- Step S1306:: The current master sends a message (for example in its beacon packets), instructing its members to switch to the other instance of the group, then switches itself. The groups are now merged.

An optimization of this method includes involves members being instructed to switch one at a time. The last member is only instructed to switch if the current master is also in range of the other instance, and only if that last member successfully switches does the current master also switch. This has the advantage of avoiding a single node being left on its own without connectivity due to the rest of the group switching.

Furthermore, nodes can have more than one Group ID. A user or a higher-level application may request a different group. The new Group ID is selected and the method follows that described with reference to Figure 5.

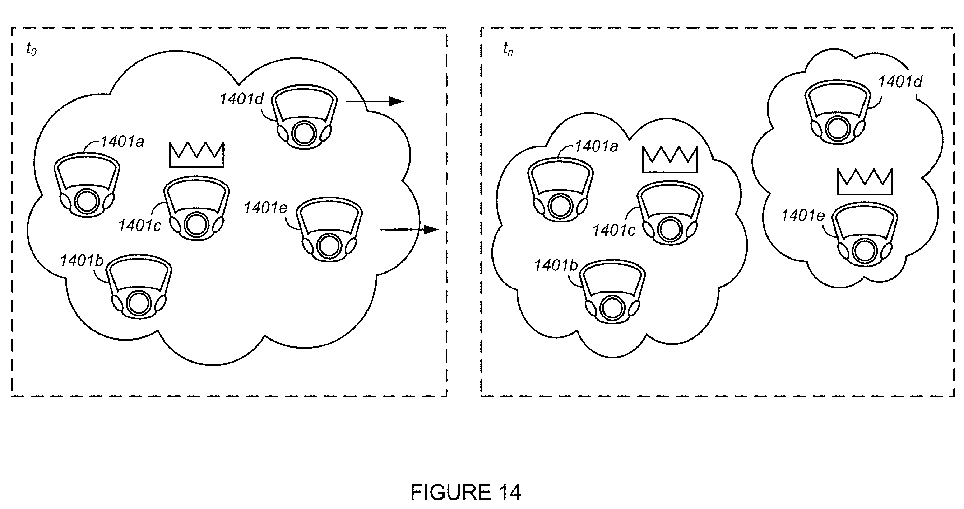

Figure 14 schematically illustrate how one group of nodes can splits into two groups. At an initial time, to, nodes 1401a, 1401b, 1401c, 1401d, 1401e have formed a group, with node 1401c operating as the current master. At a later time, tₙ, nodes 1401d, 1401e have moved out of range of the other nodes 1401 a, 1401 b, 1401 c and thus form their own group with node 1401 e operating as the current master.

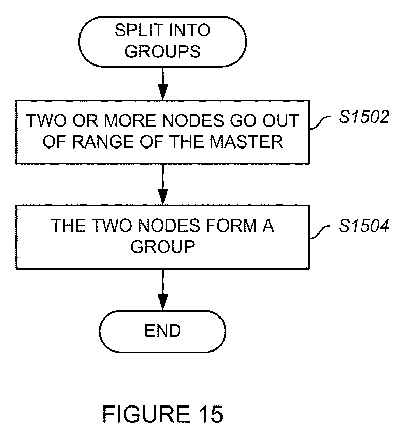

Figure 15 is a flowchart of a method of splitting into two subgroups. The method includes the following steps:
- Step S1502:: Two or more nodes move out of range of the current master, with no other node in range of all other nodes from the group.
- Step S1504:: The two or more nodes form a subgroup and are able to talk to each other. This can follow steps S504 and S508 of Figure 5, with the device that first performs the steps becoming the current master.

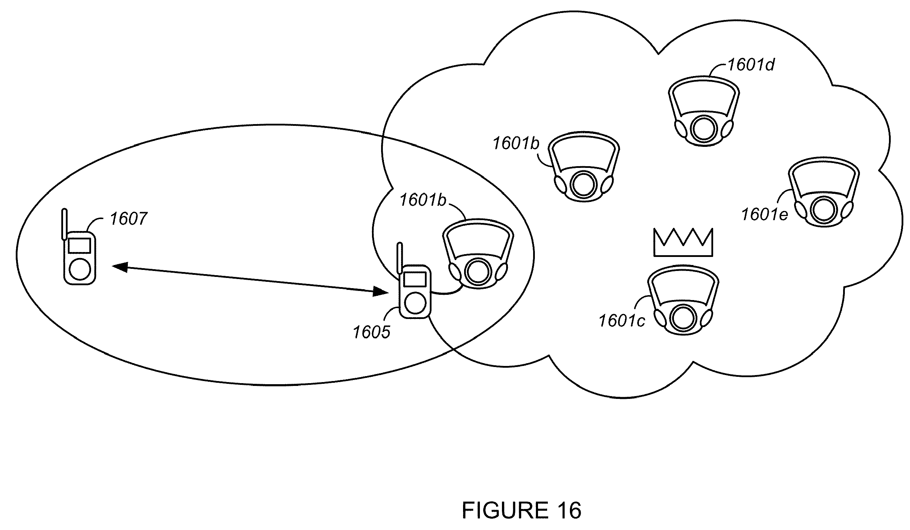

Figure 16 schematically illustrate how a group of nodes can access an external network. Here, nodes 1601 a, 1601 b, 1601 c, 1601d, 1601e have formed a group, with node 1401c operating as the master. At least one node of the group, here node 1601 b, is provided with an external or wide area network connection. The master 1601c signals the presence and/or availability of the external network connection in a message (for example by means of status data carried in beacon packets). The master also indicates to the node 1601b that it is to perform the routing. Messages to or from the WAN are routed through this assigned Node 1601 b. In particular, a node wishing to route a message to the external connection indicates this intention in the message or in an associated message or signal. When a node equipped with an external connection receives the message that is to be routed to the external network, it is routed to the external network. Furthermore, a node equipped with an external network connection can receive and route messages received from the external network to other nodes of the group. The external network can be, for example, a cellular radio network such as GSM, 3G, CDMA, and LTE, the Internet, a tactical and/or mission critical radio network such as TETRA, P25.

Synchronization of group status may be effected using tables. Nodes other than the master monitor beacon(s) and status packets from the group (the master monitors status packets for group status monitoring). Nodes (including the master) each maintain a NodeAllocationTable, storing, for each known node, the ID and capabilities of the applicable node, link status to each neighbour, and a record quality parameter. When one packet is received containing a field that does not match the ID, capabilities or other applicable parameter, the record quality parameter is modified to indicate that the record is likely to be invalid. At the start of each frame, the record quality parameter is incremented. When a packet is received containing at least partial information that does match the ID, capabilities or other applicable parameter, the record quality parameter is updated to a value indicating good quality (for example zero). When a node joins or losses a group, all records are invalidated. Each node (including the master) can also maintain a VoiceAllocationTable using a similar approach to that described for NodeAliocationTable to log which node, if any, has been allocated the voice channels, and relevant flags such as WAN traffic, QoS, and so on, if defined. When a node wishes to speak, it sends a request message (for example in a request packet) and may be acknowledged by the master and allocated a timeslot (for example in one or more beacon packets). It can then transmit in that timeslot. When a node that has been allocated one or more timeslots no longer wishes to use them, it indicates to the master in a message or a field within a message, and ceases transmission in the timeslot. The master can detect this message and can also detect when transmissions have stopped, and in either case de-allocate the timeslot. When a node becomes master, it assumes that all nodes listed in its NodeAllocationTable are in the group and that the VoiceAllocationTable defines which voice slots are allocated to nodes.

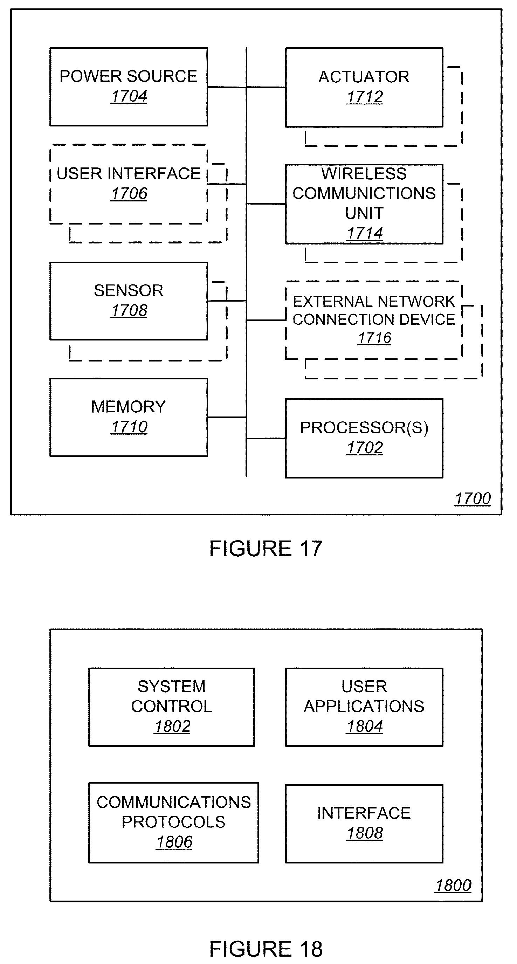

Figure 17 is a simplified and representative block diagram of a wireless communications device 1700 according to an embodiment. The device comprises one or more processors 1702 such as, for example a microprocessor, microcontroller or digital signal processor, connected via a bus to one or more of the following subsystems: a power source 1704 such as, for example, a battery; memory 1710 such as, for example, flash storage; one or more sensors 1708 such as, for example, a microphone, temperature measurement device and pressure measurement device; one or more actuators 1712; a wireless communications unit 1714 such as, for example, a transmitter/receiver or a transceiver; zero or more external network connection device(s) 1716 such as, for example, a wide area network interface, cellphone and/or TETRA device; and zero or more user interface devices 1706 such as, for example, a button, a loudspeaker, a light emitting diode and/or display. The processor 1702 is configured to provide control over the subsystems of the device 1700, including control of the device to operate as a non-master device and master device.

The wireless communications unit 1714 can be configured in a number of different antenna, transmitter/receiver and transceiver configurations. Generally, the wireless communications unit 1714 can have at least one antenna, at least one transmitter and at least one receiver (or at least one transceiver). In one particular configuration, the wireless communications unit 1714 comprises at least two antennas, and at least two radio transceivers (or alternatively one transceiver and one receiver, or one transmitter and two receivers). This provides improved resilience to radio fading and body shadowing. The device 1700 can, for example, select to receive transmissions from one or more of its antennas, such that in the event that one antenna is not able to receive signals from the selected network, the other antenna may be used to attempt to do so. Also, a device may select to transmit messages from one or more of its antennas, such that in the event that one antenna is not able to transmit signals to the selected network, the other antenna may be used to attempt to do so. The selection of which antenna to use for transmission and /or reception may be performed on the basis of a communication parameter for reception on each antenna.

It will be clear to one skilled in the art that radio systems may be constructed in a number of different ways. Some or all of the subsystems noted above may be physically integrated into one or more package(s) and/or modular device(s). Some subsystems may also be realized using two or more discrete packages and/or modular devices. It is understood that these integrations/separations do not substantially change the invention.

The processor 1702 may embody aspects of the invention through a number of functional modules that may be implemented as software, firmware and/or logic components. As illustrated in Figure 18, these can include the following: system control 1802, responsible for device setup, configuration and timing; user applications 1804, responsible for user input/output; communications protocols 1806, for performing functions such as medium access, data link layer control, network management, floating master, failover master, repeater functions, admission control, gateway functions, and other functions described herein; and interfaces 1808, for physical devices such as sensors, actuators and radio transceivers/transmitters/receivers.

Although the blocks of flow charts are illustrated in a sequential order, these blocks may where appropriate also be performed in parallel, and/or in a different order than those described herein. Also, the various blocks may be combined into fewer blocks, divided into additional blocks, and/or eliminated based upon the desired implementation. Furthermore, for the methods other processes disclosed herein, the flowchart shows functionality and operation of one possible implementation of present embodiments. In this regard, each block may represent a module, a segment, or a portion of program code, which includes one or more instructions executable by a processor for implementing specific logical functions or steps in the process. In addition, for the method and other processes disclosed herein, each block may represent circuitry that is wired to perform the specific logical functions in the process.

Although embodiments have been described with reference to emergency services, it will be appreciated that device, methods and apparatus may find different applications. These include medical applications (for voice, data and/or telemetry communication between individuals in close proximity, for example care workers, and/or for monitoring, diagnosis and/or treatment of medical conditions, for example patient devices); assistive device applications (for communication of voice and/or audio data to or from persons with a hearing impairment and/or speech impairment, for example with hearing aids); sporting and gaming applications (for voice, data and/or telemetry communication between individuals in close proximity, for example sports teams, fitness, trainers, coaches, support staff and referees); entertainment and media applications (for voice, video, data and/or audio communications to/from performers, reporters, musicians and support staff, in the preparation of live, recorded and/or broadcast content); and workplace applications (for voice, data and/or telemetry communication between individuals, machinery, goods, product and/or equipment, in areas such as industrial production, mining, retail and/or food production).

While the invention has been described with reference to exemplary embodiments, it will be apparent to those skilled in the art that various modifications and variations can be made without departing from the scope or spirit of the invention. For instance, features illustrated or described as part of one embodiment can be used with another embodiment to yield a still further embodiment. Thus, it is intended that the present invention include such modifications and variations as come within the scope of the appended claims and their equivalents.

## Claims

1. A wireless communications device for an item of personal protective equipment, the device being configured to cooperate with other such wireless communications devices to form an ad-hoc group in which one device operates as a current master and the remaining devices operate as non-masters, the device comprising:
a wireless communications unit configured to perform wireless communications with devices of the group;
a controller configured to control the device to:
(a) operate as a non-master to
transmit to the current master a request to be allocated a radio resource, and
transmit status data to the current master, and
(b) operate as the current master to
allocate radio resources to the devices of the group,
transmit beacons,
select a device from among the devices of the group as the next current master on the basis of status data received from devices of the group,
transmit to at least the selected device information indicative of the selection, and
transmit to the selected device an instruction to take over as the current master on the basis of the status data,
wherein the controller is configured to switch the device
from (a) to (b) if the device is selected as the next current master and either upon receiving the instruction from the current master or upon not receiving a beacon from the current master for a predetermined period of time, and
from (b) to (a) after transmitting the instruction.

2. A wireless communications device according to claim 1, wherein the radio resources comprise time slots within a radio frame of a frequency channel.

3. A wireless communications device according to claim 1 or 2, wherein the radio resources comprise time slots within a radio frame of a plurality of frequency channels accessed in accordance with a hopping sequence.

4. A wireless communications device according to claim 2 or 3, wherein the radio frame comprises:
a beacon time slot for use by the current master to transmit a beacon,
a request time slot for use by a non-master to transmit a request to be allocated a time slot in one or more subsequent radio frames;
at least two transmission time slots for allocation by the current master to one or more non-masters for transmission, and
a status data time slot for allocation by the current master to a non-master to transmit status data to the current master,
wherein the beacon includes information identifying the one or more non-masters to which the at least two transmission time slots are allocated.

5. A wireless communications device according to any one of the preceding claims, wherein
when the device operates as the current master, the controller is further configured to control the device to:
select an alternate frequency channel from a frequency channel that is currently being used by the devices of the group,
transmit information indicative of the alternate frequency channel, and
transmit an instruction to switch from the current communication channel to the selected alternate communication channel.

6. A wireless communications device according to any one of the preceding claims, wherein,
when the device operates as the current master, the controller is further configured to control the device to:
receive a request, from a device that has moved into communication range of the group, to join the group, and
transmit an acknowledgement indicating that the device is admitted to the group,
and
when the device operates as a non-master that has moved into communication range of the group, the controller is further configured to control the device to:
detect a beacon transmitted by the current master of the group, and
transmit a request to join the group.

7. A wireless communications device according to any one of the preceding claims, wherein,
when the device operates as the current master, the controller is further configured to control the device to
detect the presence of another group, and
transmit an instruction to devices of the group to join the other group, and
when the device operates as the non-master the controller is further configured to control the device to
receive the instruction from the current master to join the other group, and
join the other group.

8. A wireless communications device according to any one of the preceding claims, wherein,
when the device operates as the non-master, the controller is further configured to control the device to
form a group if no beacon is received from the current master for a predetermined period of time and if the device is not selected as the next current master.

9. A wireless communications device according to any one of the preceding claims, wherein the device is configured to calculate a communications metric or a device metric on the basis of received status data.

10. A wireless communications device according to any one of the preceding claims, wherein
the communications metric is indicative of one or more of: signal strength, signal interference, quality of a communication link, amount of data received, a number or list of other devices in range, and/or
the device metric is indicative of an operational state of the device or a component of the device.

11. A wireless communications device according to any one of the preceding claims, wherein the device is configured to assume the same group identifier as the other devices of the group.

12. An emergency services wireless communications system comprising a plurality of wireless communications devices according to any one of claims 1 to 11.

13. An item of personal protective equipment with an integrated or integratable wireless communications device according to any one of claims 1 to 11.

14. A method performed by a wireless communications device, comprising:
cooperating with other such wireless communications devices to form an ad-hoc group in which one device operates as a current master and the remaining devices operate as non-masters;
controlling the device to
(a) operate as a non-master to
transmit to the current master a request to be allocated a radio resource, and
transmit status data to the current master, and
(b) operate as the current master to
allocate radio resources to the devices of the group,
transmit beacons,
select a device from among the devices of the group as the next current master on the basis of received status,
transmit to at least the selected device information indicative of the selection and/or transmit to the selected device an instruction to take over as the current master,
including switching the device
from (a) to (b) if the device is selected as the next current master and either upon receiving the instruction from the current master or upon not receiving a beacon signal from the current master for a predetermined period of time, and
from (b) to (a) after transmitting the instruction.

15. A computer-readable medium carrying instructions which, when executed by a wireless communications device, causes the wireless communications device to perform the method of claim 14.
